# EUROPEAN PATENT APPLICATION

(11) **EP 2 377 817 A1**
(43) Date of publication of application: **19.10.2011**
(21) Application number: 09823887.6
(22) Date of filing: 27.10.2009
(51) Int. Cl.: C02F 1/44, B01D 61/08

(54) **REVERSE OSMOSIS DESALINATION PLANT AND THE MODULE THEREOF**

(30) Priority: 27.10.2008 RU 2008142404
(71) Applicant: FOMIN, Vladimir Fjodorovich, Volgograd 400123 (RU)
(72) Inventor: FOMIN, Vladimir Fjodorovich, Volgograd 400123 (RU)
(74) Representative: Bucher, Ralf Christian
(86) International application number: PCT/RU2009/000576
(87) International publication number: WO 2010/050847

(57) **Abstract**

The inventive reverse osmosis desalination plant comprises reverse osmosis desalination modules which are used together and each of which consists of the following three in-series jointed blocks: a diaphragm pump unit (14), a hydraulic interconnection unit (9) and a diaphragm element unit (3), wherein the hydraulic interconnection unit (9) is provided with a body which is jointed to the body of the hydraulic interconnection unit of the adjacent reverse osmosis desalination module and comprises: three main channels which are accommodated in the body and in series connected to the main channels of the hydraulic interconnection unit of the adjacent reverse osmosis desalination module, including a channel(6) for supplying low-pressure salt water, a channel (5) for draining a brine under a low pressure (in a drain) and a channel(8) for removing desalinated water. The hydraulic interconnection unit also comprises channels (4, 7) which are used, respectively, for supplying salt water under a high pressure from the diaphragm pump unit (14) to the diaphragm element unit (3) and for supplying a high pressure brine from the diaphragm element unit to the diaphragm pump unit; channels connecting, in the hydraulic interconnection unit, the diaphragm pump unit to the main channels which are respectively used for supplying low-pressure salt water (13) and remove a low-pressure brine (12); and a channel (11) for removing the desalinated water from the diaphragm element unit (3) to a corresponding main channel.

## Description

### Field of the Invention

The invention claimed refers to reverse-osmosis plants designed for sea water purification and desalination.

### Background of the Invention

A reverse-osmosis desalination plant is known as described in Patent Document ES2226537 published on 16.03.2005. The plant comprises reverse-osmosis desalination modules utilized conjointly.

A shortcoming of the design of the desalination plant consists in that the modular structure is implemented solely for the membrane elements. This circumstance leads to the necessity of a large amount of pipework to connect the modules to the pumps and common main channels, which complicates the assembling of such a desalination plant, as well as its maintenance and repair. Moreover, because of the large amount of pipework, the reverse osmosis desalination plant known in the industry occupies considerable space.

### Summary of the Invention

The technical result achieved with the invention as claimed is a fuller modular construction and, as a consequence, a more compact reverse osmosis desalination plant, improved repairability and reliability.

The afore-said technical effects are achieved in the reverse osmosis desalination plant that comprises reverse osmosis desalination modules used conjointly, wherein each of the modules consists of three units interfaced in series, namely: a diaphragm pump unit (comprising a drive, a diaphragm pump, and a recuperator), a hydraulic interconnection unit, and a diaphragm element unit, with the hydraulic interconnection unit implemented with a body interfaced to the body of the hydraulic interconnection unit of the adjacent reverse osmosis desalination module, and three main channels arranged inside the body, which are connected in series to main channels of the hydraulic interconnection unit of the adjacent reverse osmosis desalination module, including a channel for supplying low-pressure salt water, a channel for removal (to a discharge line) of brine at a low pressure, and a channel for removal of desalinated water;
channels for supplying high-pressure salt water from the diaphragm pump unit to the diaphragm element unit, and high-pressure brine from the diaphragm element unit to the diaphragm pump unit;
channels connecting the diaphragm pump unit to main channels in the hydraulic interconnection unit, namely, for supplying low-pressure salt water and removal of low-pressure brine;
and a channel for removing desalinated water from the diaphragm element unit to the respective main channel.

All the hydraulic interconnection channels may be fitted, at the points where they are coupled to the diaphragm pump and diaphragm element units, with quick-release hydraulic connections.

### Brief Description of the Drawings

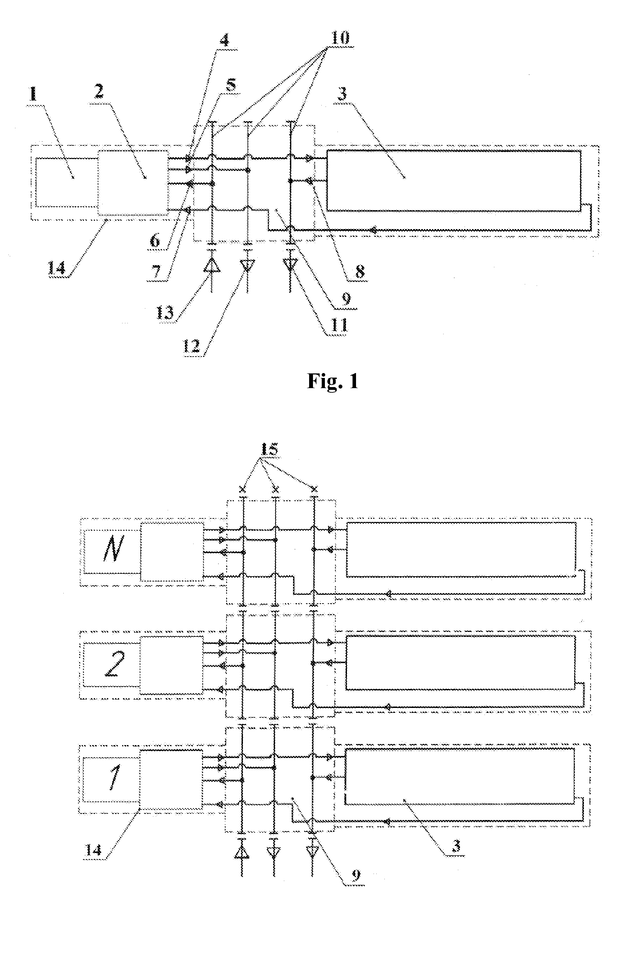

Fig.1 displays a schematic diagram of the proposed self-contained reverse-osmosis desalination module.
Fig.2 presents a diagram of a reverse osmosis desalination plant with a self-contained desalination module.
Fig.3 is a general view of the self-contained reverse osmosis desalination module.
Fig.4 is a general view of a reverse osmosis desalination plant with a few self-contained desalination modules.

### Description of the Invention

In the drawings, the following components of the reverse osmosis desalination plant are presented:
1 - drive;
2 - high-pressure pump, and recuperator;
3 - diaphragm element unit;
4 - channel for removal of high-pressure salt water to the diaphragm element unit;
5 - channel for removal of low-pressure brine from the recuperator combined with the pump, for discharging;
6 - channel for low-pressure salt water (2÷5 kg/cm²) to the high-pressure pump;
7 - channel for removal of high-pressure brine from the diaphragm element unit to the recuperator combined with the pump;
8 - channel for removal of desalinated water from the diaphragm element unit;
9 - hydraulic interconnection unit;
10 - main channels passing through the hydraulic interconnection unit;
11 - desalinated-water main channel;
12 - low-pressure brine main channel (discharge);
13 - low-pressure salt water main channel;
14 - diaphragm pump unit;
15 - stopper plugs;
I, II ... N - numbering of modules in the desalination plant.

The desalination plant comprises several (N) self-contained reverse osmosis desalination modules, each consisting of the hydraulic interconnection unit 9 with three through main channels 11, 12 and 13 for supplying low-pressure salt water, removal of low-pressure brine for discharging, and removal of desalinated water, to which on the one side the diaphragm pump unit 14, with the electro-mechanical drive 1 and the high-pressure diaphragm pump 2 combined with the recuperator is connected, and the diaphragm element unit 3, on the other side.

Units of a same module are joined together by means of ordinary bolted joints. Mounting seats are arranged on each unit for assembling purposes.

The afore-said units of each module are connected by means of channels made in the bodies of these units. These are the channel 6 for supplying low-pressure salt water to the high-pressure pump 2, the channel 4 for removal of salt water at high pressure to the diaphragm element 3, the channel 7 for removal of high-pressure brine from the diaphragm element 3 to the recuperator, the channel 5 for removal of low-pressure brine from the recuperator for discharging, the channel 8 for removal of desalinated water from the diaphragm element 3.

The channels are fitted with safety valves (quick-release hydraulic connections) that shut off the channels in case the diaphragm pump unit or the diaphragm element unit is disconnected, which enables prompt disengagement of the units for replacement in the course of repair or preventive maintenance.

The diaphragm pump unit 14, the hydraulic interconnection unit 9, and the diaphragm element unit 3 are positioned along the common axis of the self-contained module. Such modules, more precisely, their hydraulic interconnection units, are joined together at faces with alignment pins and fastened with each other by means of special bolts. The main channels are connected concurrently with alignment. The leak-tightness of the main channels is ensured by sealing elements.

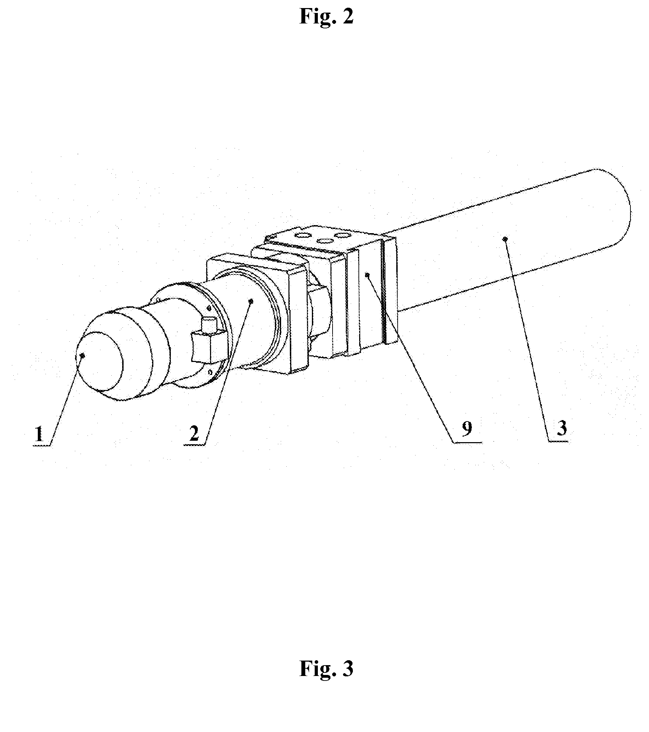

The desalination plant and the self-contained desalination module function as follows. Low-pressure salt water (2÷5 kg/cm²) is supplied to the central package of the hydraulic interconnection unit 9 and via the channel 6 it is fed to the high-pressure pump 2, wherefrom the water, under a pressure high enough for the osmosis process, flows to the diaphragm element 3 via the channel 4, via the channel 8 of which the desalinated water is fed to the hydraulic interconnection unit 9 to be removed then from the module via the main channel 11. Via the channel 7, high-pressure brine is removed from the diaphragm element 3 and after passing through the hydraulic interconnection unit it is fed to the recuperator of the diaphragm pump unit, where an additional portion of water is injected into the diaphragm element 3 due to the energy of the brine in the channel 4. This design makes it possible to assemble a few self-contained desalination modules by combining them along the main channels and to get, as a result, a desalination plant of a required capacity (Fig.2). In the last-in-the-line module (from above as shown in Fig.2), the main channels 10 are shut off with stop plugs 15. In Fig.3, an embodiment of the self-contained desalination module is presented, which consists of an electric motor, planetary reduction gear, high-pressure pump and recuperator, a central package of the hydraulic interconnection unit, and a pipe with a diaphragm element.

The self-contained desalination module as claimed is compact, lends itself to easy and quick assembly into large-scale desalination facilities, and features a relatively small amount of pipework.

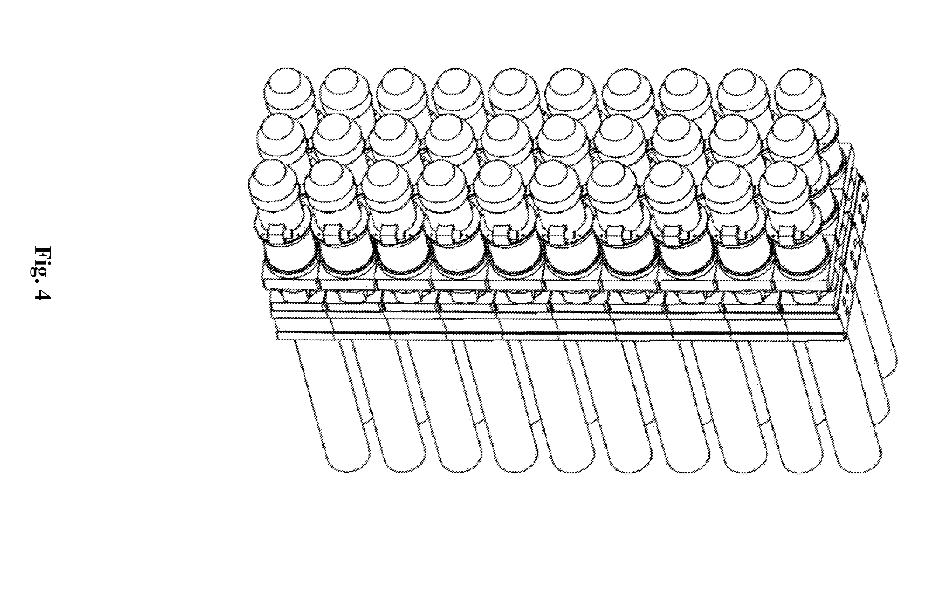

In the reverse osmosis desalination plant claimed, a few identical compact reverse osmosis desalination modules are arranged in parallel (Fig.4), which ensures the overall compactness of the plant, simplifies the operation of the facility, and improves its repairability. Also, combined assembly of several "stacks" formed of parallel modules is provided for. In such a configuration, modules of adjacent "stacks" are joined together by means of dovetail-type groove joints made on lateral faces of the body of the hydraulic interconnection unit of each module.

## Claims

1. The reverse osmosis desalination plant comprising reverse osmosis desalination modules used conjointly, wherein each of the reverse osmosis desalination modules consists of three units combined in series, namely, a diaphragm pump unit, a hydraulic interconnection unit, and a diaphragm element unit, and wherein the hydraulic interconnection unit is made with a body interfaced with the body of the hydraulic interconnection unit of the adjacent reverse osmosis desalination module, and three main channels arranged inside the body, which are connected in series to main channels of the hydraulic interconnection unit of the adjacent reverse osmosis desalination module, including a channel for supplying low-pressure salt water, a channel for removal (via a discharge line) of brine at a low pressure, and a channel for removal of desalinated water; channels for supplying high-pressure salt water from the diaphragm pump unit to the diaphragm element unit, and high-pressure brine from the diaphragm element unit to the diaphragm pump unit; channels connecting the diaphragm pump unit to main channels in the hydraulic interconnection unit, namely, for supplying low-pressure salt water and removal of low-pressure brine; and a channel for removing desalinated water from the diaphragm element unit to the respective main channel.

2. The reverse osmosis desalination module wherein the module consists of the following three units arranged in series: a diaphragm pump unit, a hydraulic interconnection unit, and a diaphragm element unit, and wherein the hydraulic interconnection unit is implemented with a body interfaced with the body of the hydraulic interconnection unit of the adjacent reverse osmosis desalination module, and three main channels arranged inside the body, for supplying low-pressure salt water, removal of low-pressure brine, and removal of desalinated water; channels for supplying high-pressure salt water from the diaphragm pump unit to the diaphragm element unit, and high-pressure brine from the diaphragm element unit to the diaphragm pump unit; channels connecting the diaphragm pump unit to main channels in the hydraulic interconnection unit, namely, supplying low-pressure salt water and removing low-pressure brine; and a channel for removal of desalinated water from the diaphragm element unit via the respective main channel.

3. The plant as claimed in claim 2 wherein all the hydraulic interconnection channels are fitted, at the points where they are coupled to the diaphragm pump and diaphragm element units, with quick-release hydraulic connections.

4. The plant as claimed in claim 2 wherein the diaphragm pump unit comprises an electric motor, planetary reduction gear, and a recuperator combined with a high-pressure pump.
